# EUROPEAN PATENT SPECIFICATION

(11) **EP 0 535 909 B1**
(45) Date of publication and mention of the grant of the patent: **01.04.1998**
(21) Application number: 92308855.3
(22) Date of filing: 29.09.1992
(51) Int. Cl.: G10L 5/06

(54) **Speech recognition**
Spracherkennung
Reconnaissance de la parole

(30) Priority: 01.10.1991 JP 278896/91
(43) Date of publication of application: 07.04.1993
(73) Proprietor: International Business Machines Corporation, Armonk, N.Y. 10504 (US)
(72) Inventor: Nishimura, Masafumi, Yokohama-shi, Kanagawa-ken (JP); Kuroda, Akihiro, Suginami-ku, Tokyo (JP); Toshioka, Koichi, Kawasaki-shi, Kanagawa-ken (JP)
(74) Representative: Bailey, Geoffrey Alan

(56) References cited:
- EP-A- 0 429 057
- WESCON'89 (CONFERENCE RECORD, San Francisco, California, 14th - 15th November 1989), pages 380-383, IEEE, New York, US; J.L. BURKE: "Real time processing moves to desktop engineering"
- CSELT Technical Reports, vol. XX, no. 1, March 1992 (Special Issue on EUROSPEECH'91, Genova, 24th - 26th September 1991), pages 55-59, Torino, IT; A. CIARAMELLA et al.: "A PC housed speaker independent large vocabulary continuous telephonic speech recognizer"

## Description

This invention relates to speech recognition and, more particularly, to a system capable of performing real time recognition of a large vocabulary by means of a signal processing card packaged on a bus of a personal computer (hereinafter called a PC).

Prior art large vocabulary speech recognition systems are broadly divided into the following two categories in accordance with their packaging types:
(1) Systems of a type that perform speech recognition by holding in the recognition system a complete set of data relating to a vocabulary recognizable at a point of time and issues the recognition result to a PC or the like (normally through a communication line such as RS-232C). This is often employed in box type (stand alone) recognition systems. Recognition systems of this type are very expensive because they require hardware for holding a large amount of data in the system. DP-3000 speech recognition system of Nippon Electric Co., Ltd. is one speech recognition system of this type.
(2) Systems of a type that use a signal processing card packaged on a bus of a PC so that only extraction of characteristic values (alternatively, only extraction of the characteristic values and labelling) is performed on the card and main processing for speech recognition is performed by a processor of the PC. This method can be realized inexpensively, but a large part of the PC processor resource must be used for speech recognition itself, which often prevents building of large scale applications using speech recognition or degrades the response speed of its speech recognition system. Dragon Writer 1000 of Dragon Systems Inc. of U.S.A. is one of speech recognition systems of this type.

In a related field, EP-A-0429057 discloses a text-to-speech system having a host system operable to perform a text-to-speech application program. The host system includes a memory storing the lexicon for a separate text-to-speech device.

No proposal has been known heretofore which realizes large vocabulary speech recognition at a low cost without imposing load to the PC processor.

Accordingly, this invention provides a speech recognition processing system, comprising
a computer (1) having a main memory (4); and
a speech recognition unit (5) connected to the computer;
said speech recognition unit comprising storage means (9) for storing label information for a set of labels indicative of phone types each assignable to a predetermined time period;
logic (8) for converting input speech into a label stream on the basis of the stored label information; logic (8) for accumulating probabilities based on the label stream and word models for words in a vocabulary defined by Markov model probability information for words in a vocabulary;
logic (8) for determining one or more words to be the result of the recognition on the basis of the accumulated probabilities;
characterised in that the Markov model probability information defining the word models is stored in the computer main memory (4) and the speech recognition unit (5) further comprises means (6) for fetching the stored Markov model probability information related to the labels in the label stream as required by direct memory access transfer from the main memory of the computer.

This invention has been made in view of the aforementioned circumstances, and enables a speech recognition system to be provided that performs large vocabulary speech recognition by means of a signal processing card packaged on a PC bus and effects real time speech recognition without imposing load to the PC processor.

In one embodiment, a unit having the function of a bus master is used as a PC bus interface of the signal processing card. A table of enormous probability values is held in a main memory of the PC. In response to a series of labels obtained by word vocalization, only the necessary part of the table is read from the main memory of the PC into a memory of the signal processing card by DMA transfer of the bus master of the signal processing card, and speech recognition processing is performed on the card. As a result, real time speech recognition of a large vocabulary is realized on the signal processing card only having a small scale memory.

An embodiment in which the invention is applied to 1,000 words speech recognition based on fenonic Markov models is explained below with reference to the drawings, in which:
Fig. 1 is a diagram showing a structure of fenonic Markov model used in an embodiment of the invention;
Fig. 2 is a diaqram for explanation of a fenonic word speech model used in the same embodiment;
Fig. 3 is a block diagram showing a construction of the same embodiment;
Fig. 4 is a diagram for explaining a data structure in a main memory and its transfer method; and
Fig. 5 is a flow chart for explaining the flow of process of the same embodiment.

### (1) Summary of Speech Recognition

This embodiment uses polling fast match as a preliminary selecting method and uses a procedure based on fenonic Markov models for detailed matching, thereby realizing a large vocabulary recognition system by commonly using these procedures. First explanation is directed to an outline of the polling fast match and detailed matching based on fenonic Markov models.

### (1-1) Polling Fast Match

In response to labels obtained every vocal analysis interval of about 10 msec (this unit is hereinafter called a "frame"), voting by voting functions is executed, and only those that gave most significant scores at the end of generation (in this embodiment, most significant 25 words among 1,000 words) are delivered as candidate words to the detailed matching. This procedure pays attention only to label occurrence probabilities in each frame and does not include the time-wise structure of a label stream; however, it is high speed matching means and effective as a preliminary selecting procedure for large vocabulary speech recognition. The voting function is given by, for example, logPr(L(t)|W(i)). This may be considered to be the logarithmic value of the probability that each word W(i) causes a label L(t) observed at time t to be generated. Polling fast match is explained in detail also in JA PUPA 62-220996 (U.S. Patent Specification No. 4,718,094).

### (1-2) Detailed Matching

By using a sort of hidden Markov Model called fenonic Markov model, detailed matching processing in the form including the time-wise structure of a label stream obtained by word vocalization is executed. Fenonic Markov model ( Fenene Markov model) is explained in detail also in JA PUPA 62-178999 (U.S. Patent Specification No. 4,833,712).

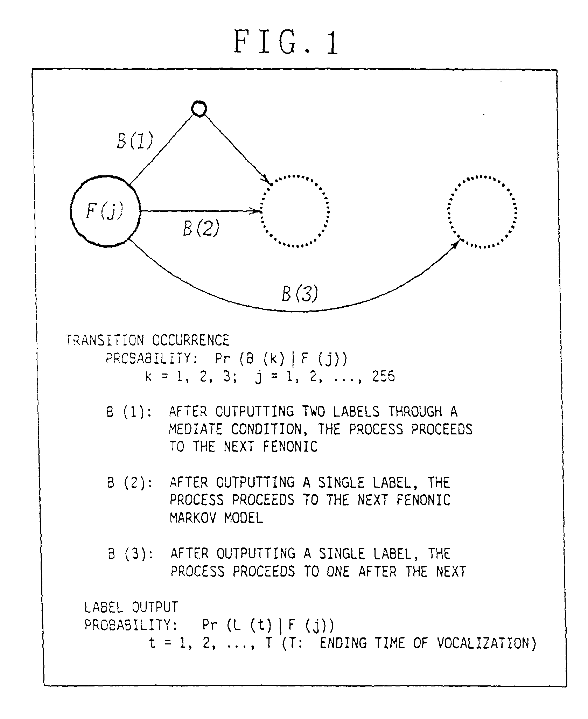

Fig. 1 shows the structure of a fenonic Markov model used in the embodiment. Pr(B(k)|F(j)) is the transition probability that the fenonic Markov model F(j) causes transitions B(k). Pr(L(t)|F(j)) is the label output probability that the fenonic Markov model F(j) outputs the label L(t) at time t.

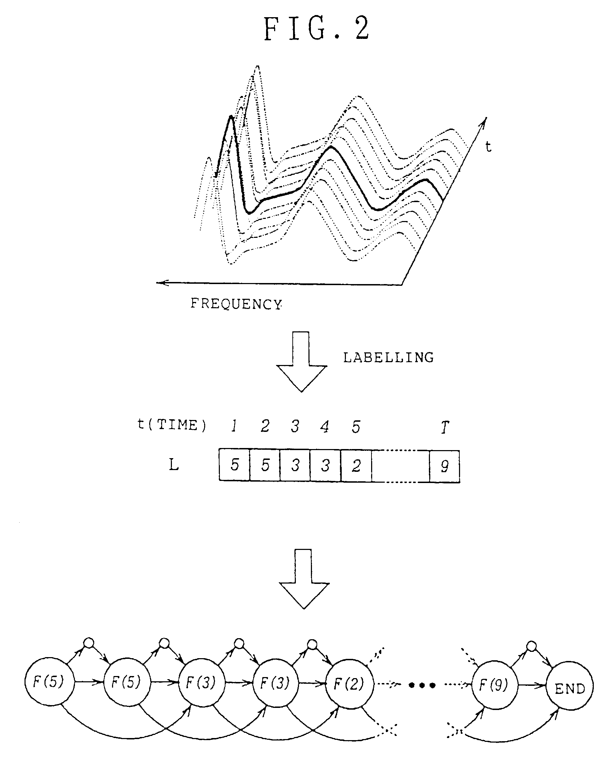

First, a label stream obtained by each word vocalization (this is called a base form) is prepared. As shown in Fig. 2, a set including fenonic Markov models in sequential connection in one-to-one correspondence with label numbers of a label stream is called a fenonic word speech model. The base form is prepared for each recognition target word from actual vocalization thereof, and it is registered in a base form table.

The logarithmic likelihood, which is a score, is obtained for the series of input speech labels L(t) and each candidate word W(i) by using Viterbi algorithm, and a word W(i) giving a maximum score is determined to be the recognition result.

### (2) System Construction

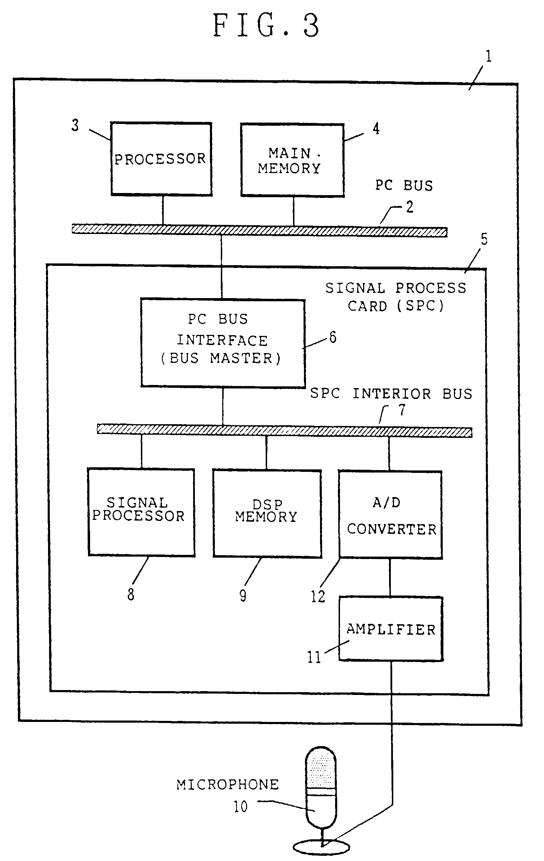

Construction of the system is explained below with reference to Fig. 3. Fig. 3 shows an example realizing the invention by using a PC of IBM Japan, Limited, PS/55 (trade mark of International Business Machines Corp. in certain countries).

PC 1 includes therein a microchannel PC bus 2 to which a processor 3 of the PC and a main memory 4 of the processors 3 are coupled. The main memory 4 is normally as large as several MB to ten and several MB (in this embodiment, 6 MB), and holds all data on a vocabulary recognizable at a point of time (in this embodiment, 1,000 words). Specific contents of data and their arrangement in the main memory 4 (memory map) are explained in a later paragraph: (3) Structure and Transfer Method of Data in Main Memory.

On the other hand, a signal processing card (SPC) 5 is also coupled to the PC bus 2 via a bus interface 6. The signal processing cards (SPC) 5 includes therein an SPC interior bus 7 to which are connected, in addition to the PC bus interface 6, a high speed signal processor (DSP) 8, a high speed DSP memory 9 for the signal processor (DSP) 8, and an analog-to-digital (A/D) converter 12. The DSP memory 9 normally has a capacity as much as several decade kB (in this embodiment, 64 KB), and cannot hold all of data related to the target vocabulary to be recognized. If the DSP memory 9 has a memory as large as the main memory 4 of PC1, it could of course hold all of the data. However, if a large amount of memory having a high speed corresponding to the speed of DSP 8 is on board, the DSP memory 9 will become very expensive.

The PC bus interface 6 has a function of a bus master. Because of the bus master function, the inter-face 6 can temporarily acquire the right of use of the PC bus and, under its own control of the PC bus 2, can perform direct memory access (DMA) transfer.

An input speech is supplied through a microphone 10 and an amplifier 11 to the A/D converter 12 and converted therein into digital data. After this, it is sent through the SPC interior bus 7 and stored in the DSP memory 9. The signal processor (DSP) 8 performs vocal analysis for each frame by using the data, and performs extraction of characteristic amount and labelling.

By using labels obtained in the DSP memory 9 for each frame, the signal processor (DSP) 8 performs polling fast match of a frame synchronous type. More specifically, every time an input label is obtained, the score of polling fast match for each word is renewed. Data on all of labels for polling fast match (in this embodiment, 256 labels) are stored in the main memory 4. However, for the reason stated above, when data only on the label (a single label) obtained in the current frame is acquired in the DSP memory 9, polling fast match is possible. Therefore, the signal processor (DSP) 8 effects DSP transfer by using the bus master function of the bus interface 6 to effect DAP transfer, and transfers the data only on the label obtained in the current frame from the main memory 4 to the DSP memory 9 to effect polling fast match.

In parallel with labelling and polling fast match for each frame, the signal processor (DSP) 8 also performs detection of a speech interval. When the end of the speech interval is reached, it selects a candidate word for detailed matching on the basis of the score of the polling fast match at that point of time. In this embodiment, most significant 25 words are maintained as candidates. Data on all of words for detailed matching (in this embodiment, 1,000 words) and label output probabilities of all of fenonic Markov models are stored in the main memory 4. Transition probabilities, small in data amount, always stay on the DSP memory. However, since detailed matching is to be performed in the frame synchronous fashion, by successively transferring the label output probability in correspondence with each label into the DSP memory 9, in addition to data on 25 candidate words, detailed matching is possible. Therefore, the signal processor (DSP) 8 performs DMA transfer by using the bus master function of the PC bus interface 6, and transfers the foregoing two kinds of data from the main memory 4 to the DSP memory 9 to perform detailed matching.

### (3) Structure and Transfer Method of Data in Main Memory

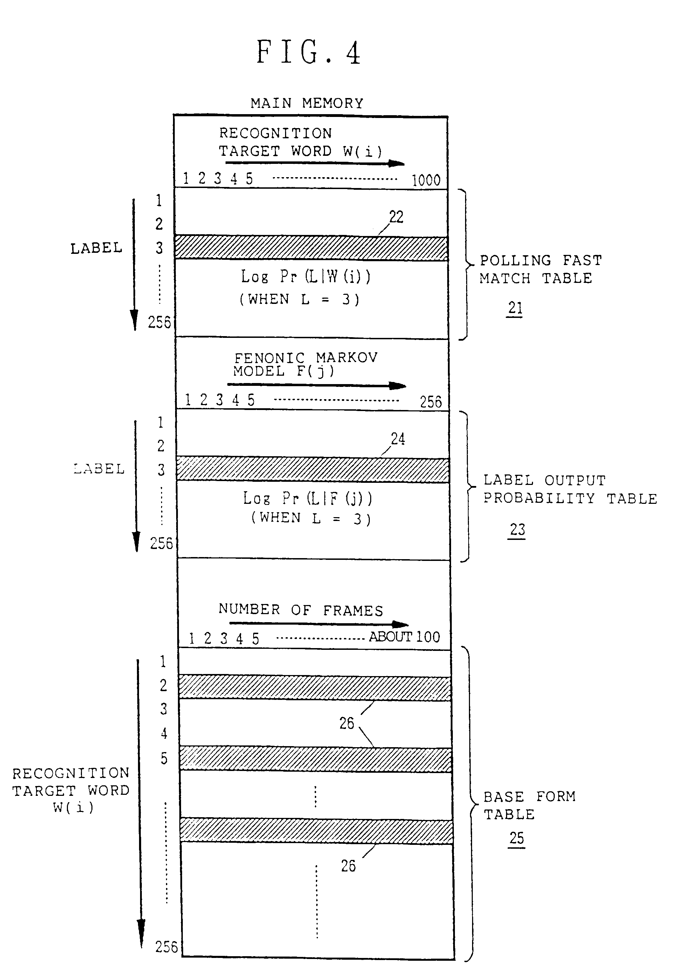

A structure and a transfer method of data in the main memory 4 are explained below with reference to Fig. 4. Specifically, structures of three tables related to this embodiment and their transfer methods are explained respectively.

### (3-1) Polling Fast Match Table 21

The voting function used in this embodiment is represented by logPr(L(t)|W(i)). It is considered to be the logarithmic value of the occurrence probability of a label L(t) observed at time t when a word W(i) is given. The score Sw(i) is given by adding the voting function for t, and the score for each word is renewed every time an input label is obtained. In order to obtain the score, it is necessary to hold the probability value table (polling fast match table 21). In this embodiment, target words are 1,000 words, and the kinds of labels are 256. When each element consists of 2 bytes, the table size is 512 KB, and it is impossible to store the entirety in the DSP memory. Therefore, as described above, this table is held in the main memory 4 of PC 1, and the signal processing card (SPC) 5 DMA-transfers data 22 (in this embodiment, 2 KB) only on the label obtained in the current frame, from the main memory 4 to the DSP memory 9, to effect polling fast match. Note that the polling fast match table 21 is such that the appearance probability values for all of the target vocabulary are arranged for each label on the main memory in order to facilitate DMA transfer and addressing. Thus, the memory amount required for polling fast match on the signal processing card (SPC) 5 is 2 kB for a DMA transfer buffer and 2KB for holding the score Sw(i), that is, only 4 kB in total. In case that the same label continues (such as stationary vowel portion), DMA transfer need not be repeated.

### (3-2) Label Output Probability Table 23

The output probability of a label L(t) of a fenonic Markov model F(j) is represented by logPr(L(t)|F(j)). In order to obtain the likelihood of each word model for the input label stream, a label output probability table 23 is necessary. In this embodiment, kinds of fenonic Markov models and those of labels are 256, respectively. If each element consists of 2 bytes, the table size is 131 KB, and the DSP memory 9 cannot store the entirety. Therefore, in the same manner as the polling fast match table 21, the table 23 is also held in the main memory 4 of PC 1. Detailed matching is effected in the frame synchronous fashion, and the signal processing card (SPC) 5 reads only data 24 on all of fenonic Markov models related only to the current label (in this embodiment, 512 bytes) from the main memory 4 into the DSP memory 9 by using DMA transfer. Also for the label output probability table 23, output probability values for all of the fenonic Markov models are arranged for each label on the main memory in order to facilitate DMA transfer and addressing. Thus, the memory amount required for holding output probability values on the signal processing card (SPC)5 is only 512 bytes. Also in this case, if the same label continues (such as stationary vowel portion), DMA transfer need not be repeated.

### (3-3) Base Form Table 25

In this embodiment, the target vocabulary is 1,000 words. Assuming that the average word length is 100 frames, a memory capacity as large as 100 kB is necessary for holding the base form of the entire words, and the DSP memory 9 cannot store the base form of the entire words. Therefore, in the same manner as the foregoing two examples, the base form table 25 is held in the main memory 4 of PC1, and the signal processing card (SPC) 5 reads only base form data 26 on candidate words for detailed matching (in this embodiment, 25 words) from the main memory into the DSP memory 9 on the basis of the scores of the polling fast match by using DMA transfer.

### (4) Flow of Process

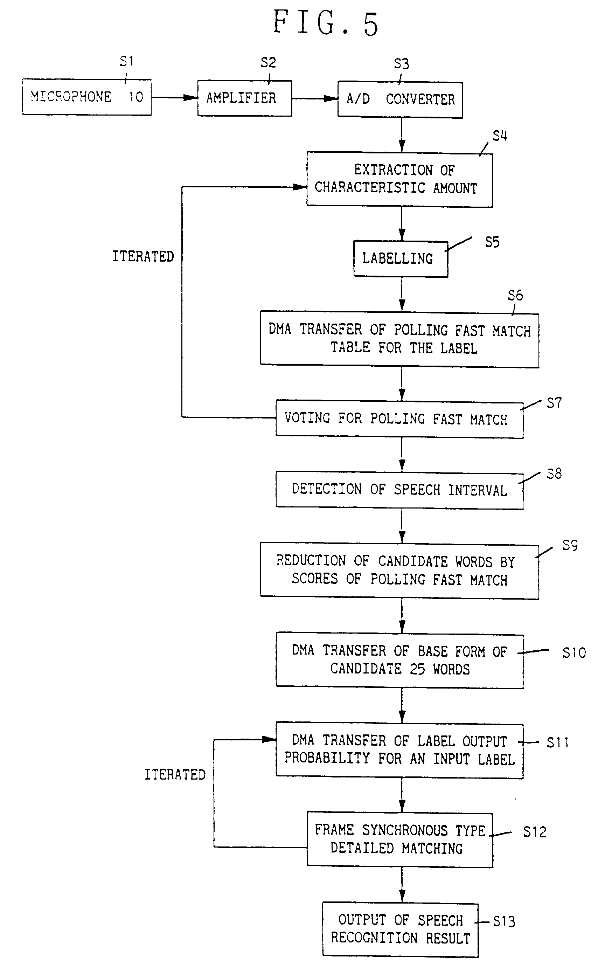

In regard to the viewpoint of flow of process, the embodiment is explained below with reference to Fig. 5.

An input speech is supplied through the microphone 10 and the amplifier 11 to the A/D converter 12, and converted therein into digital data (step S1 to S3). For each frame, extraction of characteristic amount is performed in step S4, and labelling in step S5. In step S6, the data 22 for polling fast match in regard to the label is DMA-transferred from the main memory to the DSP memory 9. Step 7, by using the data 22, performs voting for polling fast match. Steps S4 to S7 are repeated until the end of the speech interval is detected. When the speech interval is detected in step 8, step S9 selects candidate 25 words for detailed matching on the basis of the scores of polling fast match upon detection of the end of the speech, and step 10 DMA-transfers the base form 26 of these 25 words from the main memory 4 to the DSP memory 9. After this, in order to perform detailed matching of the frame synchronous type, output probability for each input label is DMA-transferred from the main memory 4 to the DSP memory 9 in step 11. The base form, the foregoing label output probability and the transition probability, always staying on the DSP memory 9, are used in step 12 to perform detailed matching of the frame synchronous type. Steps 11 and 12 are repeated by the number of frames of the speech (number of labels). Finally, step 13 outputs words having highest likelihoods as the recognition result.

As described above, according to the invention, when large vocabulary speech recognition by using a signal processing card packaged on a bus of a PC is desired, real time speech recognition is realized without applying load to the PC processor at a low cost.

It is aimed that a signal processing card 5 packaged on a bus 2 of a personal computer 1 can perform not only signal processing of a speech but also speech recognition using data obtained by the signal processing.

A signal processing card 5 packaged on a bus 2 of a personal computer 1 has a bus master 6 which is used to access to a main memory 4 of the personal computer 1. A table of enormous probability values required for speech recognition is held in the main memory 4, so that, every time when a label to be processed comes along, only necessary part of the table is read from the main memory 4 to a memory 9 of the signal processing card by DMA transfer to perform speech recognition processing.

## Claims

1. A speech recognition processing system, comprising
a computer (1) having a main memory (4); and
a speech recognition unit (5) connected to the computer;
said speech recognition unit comprising storage means (9) for storing label information for a set of labels indicative of phone types each assignable to a predetermined time period;
logic (8) for converting input speech into a label stream on the basis of the stored label information; logic (8) for accumulating probabilities based on the label stream and word models for words in a vocabulary defined by Markov model probability information for words in a vocabulary;
logic (8) for determining one or more words to be the result of the recognition on the basis of the accumulated probabilities;
characterised in that the Markov model probability information defining the word models is stored in the computer main memory (4) and the speech recognition unit (5) further comprises means (6) for fetching the stored Markov model probability information related to the labels in the label stream as required by direct memory access transfer from the main memory of the computer.

2. A speech recognition processing system as claimed in claim 1, wherein the means (6) for fetching the probability values by direct memory access transfer is a bus master.

3. A speech recognition processing system as claimed in claim 1 or claim 2, including a memory device having a speed higher than that of the main memory, said memory device temporarily storing said fetched probability values and storing the accumulated probability values.

4. A speech processing method, comprising the steps of:
storing label information for a set of labels indicative of phone types each assignable to a predetermined time period;
converting input speech into a label stream on the basis of the stored label information;
accumulating probabilities based on the label stream and word models for words in a vocabulary defined by Markov model probability information for words in a vocabulary;
determining one or more words to be the result of the recognition on the basis of the accumulated probabilities;
characterised by
storing the Markov model probability information defining the word models in the main storing memory of a computer; and
fetching the stored Markov model probability information related to the labels in the label stream as required by direct memory access transfer from the main memory of the computer.

5. A speech recognition system for storing information on probability values of Markov models defining speech models of vocabulary words and information on a set of labels indicating phone types assignable to a micro period of time, for sequentially generating corresponding labels in response to an input speech to generate a label stream of said input speech, for accumulating said probability values of said Markov models on the basis of said speech models of said words and said label stream, and for performing speech recognition on the basis of the accumulated values, comprising:
a bus;
a processor coupled to said bus;
a main memory for said processor for storing said probability values of said Markov models accessively to each of said labels, said main memory being coupled to said bus; and
a signal processing unit coupled to said bus,
said signal processing unit comprising:
means for storing information on said set of labels;
means for converting an input speech into said label stream on the basis of said information on the set of labels;
means for fetching said probability values of a Markov model related to each of labels contained in said label stream by direct memory access transfer from said main memory;
means for accumulating said probability values thus fetched for each of said vocabulary words; and
means for accumulating said probability values thus fetched for each of said vocabulary words; and
means for determining one or more words to be the result of the recognition on the basis of accumulated probability values.

6. A speech recognition system as claimed in claim 5, wherein said means for fetching said probability values by direct memory access transfer in a bus master.

7. A speech recognition system as claimed in claim 6, wherein said signal processing unit includes a memory having a speed higher than that of said memory, said memory temporarily storing said fetched probability values and storing said accumulated probability values.

8. A speech recognition processing system comprising a computer system having a processor, a main memory, and input and output devices coupled in common to a bus, and further comprising a speech recognition unit connected to the bus; said speech recognition processing unit comprising
means for converting an input speech into a label stream on the basis of information on a set of labels indicating phone types assignable to micro period of time;
means for fetching probability values of a Markov model related to each label contained in said label stream by direct memory access transfer from a main memory which beforehand stores information on said probability values of said Markov models defining speech models of vocabulary words, said information being arranged accessively to each of said labels;
means responsive to probability values thus fetched for accumulating said probability values for each of said words; and
means responsive to the accumulated probability values for determining one or more words to be the result of the recognition.

9. A speech recognition system for storing information on a set of first labels indicating phone types assignable to a micro period of time, information on probabilities that respective ones of said first labels are produced in utterance of respective ones of said first labels are produced in utterance of respective vocabulary words, information on speech models of said vocabulary words each represented as a chain of Markov models in a set which set includes Markov models corresponding to respective second labels indicating phone types assignable to a micro period of time, and information on probability values of said Markov models, in response to an input speech, for sequentially producing corresponding first labels to generate a first label stream of said input speech, for determining whether said vocabulary words are recognition candidates by using said first label streams and said probabilities that respective ones of said first labels are produced in utterance of respective vocabulary words, for accumulating said probability values of said Markov models on the basis of speech models of said recognition candidates and said first label stream, and for performing detailed speech recognition on the basis of accumulated probability values, comprising:
a bus;
a processor coupled to said bus;
a main memory for said processor for storing information of said probabilities that respective ones of said first labels are produced in utterance of respective ones of said vocabulary words, accessively to each of said first labels, and storing information on speech models of said words accessively to each of said vocabulary words, said main memory being coupled to said bus; and
a signal processing unit coupled to said bus, further
said signal processing unit including:
means for converting said input speech into said first label stream;
means for fetching, for each of labels contained in said first label stream, information on probabilities that respective ones of said vocabulary words produce said first label, said information being fetched by direct memory access transfer from said main memory;
means for accumulating probabilities thus fetched for said vocabulary word respectively upon each of said labels contained in said first label stream;
means for determining candidate words on the basis of the accumulated probabilities;
means, for each of first labels contained in said first label stream, for fetching information on values of probability that respective ones of said labels are produced in each transition, said information being fetched by direct memory access transfer from said main memory;
means for computing likelihood that said word candidates be said input speech in response to said information on speech models and said information on probability values fetched for respective ones of said first labels; and
means for generating a recognition result on the basis of said likelihood.

## Patentansprüche

1. Ein Spracherkennungs- und -verarbeitungssystem, das folgendes umfaßt:
einen Computer (1) mit einem Hauptspeicher (4); und
eine Spracherkennungseinheit (5), die an den Computer angeschlossen ist;
wobei die genannte Spracherkennungseinheit ein Speichermittel (9) zur Speicherung von Etiketteninformationen für eine Gruppe von Etiketten zur Angabe von Klangfarben umfaßt, die einer vorbestimmten Zeitperiode zugeordnet werden können;
eine Logik (8) zur Konvertierung der eingegebenen Sprache in einen Etikettenstrom auf der Basis der gespeicherten Etiketteninformationen; eine Logik (8) zur Anhäufung von Wahrscheinlichkeiten auf der Grundlage des Etikettenstroms und Wortmodelle für Wörter in einem Vokabular, das durch die Markov-Modell-Wahrscheinlichkeitsinformationen für Wörter in einem Vokabular definiert ist;
eine Logik (8) zur Bestimmung eines oder mehrerer Wörter, die das Ergebnis der Erkennung auf der Basis der angehäuften Wahrscheinlichkeiten ist;
dadurch charakterisiert, daß die Markov-Modell-Wahrscheinlichkeitsinformationen, die die Wortmodelle definieren, im Hauptspeicher (4) des Computers gespeichert sind, und daß die Spracherkennungseinheit (5) weiterhin ein Mittel (6) zum Abruf der gespeicherten Markov-Modell-Wahrscheinlichkeitsinformationen, die sich auf Etiketten im Etikettenstrom beziehen, umfaßt, wenn diese Informationen für die direkte Speicherzugriffsübertragung aus dem Hauptspeicher des Computers benötigt werden.

2. Ein Spracherkennungs- und -verarbeitungssystem gemäß Anspruch 1, wobei das Mittel (6) für den Abruf der Wahrscheinlichkeitswerte durch direkte Speicherzugriffsübertragung ein Bus-Master ist.

3. Ein Spracherkennungs- und -verarbeitungssystem gemäß Anspruch 1 oder Anspruch 2, das eine Speichereinrichtung enthält, deren Geschwindigkeit höher ist als die des Hauptspeichers, wobei die genannte Speichereinrichtung die genannten abgerufenen Wahrscheinlichkeitswerte vorübergehend speichert und die angehäuften Wahrscheinlichkeitswerte speichert.

4. Ein Sprachverarbeitungsverfahren, das die folgenden Schritte umfaßt:
Speicherung von Etiketteninformationen für eine Gruppe von Etiketten, die zur Angabe von Klangfarben dienen, die je einer vorbestimmten Zeitperiode zugeordnet werden können;
Konvertierung der eingegebenen Sprache in einen Etikettenstrom auf der Basis der gespeicherten Etiketteninformationen;
Anhäufung von Wahrscheinlichkeiten auf der Basis des Etikettenstroms und Wortmodelle für Wörter in einem Vokabular, das durch die Markov-Modell-Wahrscheinlichkeitsinformationen für Wörter in einem Vokabular definiert ist;
Bestimmung eines oder mehrerer Wörter, die das Ergebnis der Erkennung auf der Basis der angehäuften Wahrscheinlichkeiten ist;
dadurch charakterisiert, daß
die Markov-Modell-Wahrscheinlichkeitsinformationen, die die Wortmodelle im Hauptspeicher eines Computers definieren, gespeichert werden; und
die gespeicherten Markov-Modell-Wahrscheinlichkeitsinformationen, die sich auf die Etiketten im Etikettenstrom beziehen, abgerufen werden, wenn diese Informationen für die direkte Speicherzugriffsübertragung aus dem Hauptspeicher des Computers benötigt werden.

5. Ein Spracherkennungssystem zur Speicherung von Informationen über Wahrscheinlichkeitswerte von Markov-Modellen, die Sprechmodelle von Vokabularwörtern und Informationen über eine Gruppe von Etiketten definieren, die Klangfarben angeben, die einer Mikrozeitperiode zugeordnet werden können, um anhand einer eingegebenen Sprache zur Erzeugung eines Etikettenstroms der genannten eingegebenen Sprache nacheinander entsprechende Etiketten zu erzeugen, um die genannten Wahrscheinlichkeitswerte der genannten Markov-Modelle auf der Basis der genannten Sprechmodelle der genannten Wörter und des genannten Etikettenstroms anzuhäufen, und um eine Spracherkennung auf der Basis der angehäuften Werte durchzuführen, wobei das System folgendes umfaßt:
einen Bus;
einen Prozessor, der an den genannten Bus gekoppelt ist;
einen Hauptspeicher für den genannten Prozessor zur Speicherung der genannten Wahrscheinlichkeitswerte der genannten Markov-Modelle für jedes der genannten Etiketten, wobei der genannte Hauptspeicher an den genannten Bus gekoppelt ist; und
eine Signalverarbeitungseinheit, die an den genannten Bus gekoppelt ist,
wobei die genannte Signalverarbeitungseinheit folgendes umfaßt:
ein Mittel zur Speicherung von Infomationen über die genannte Gruppe von Etiketten;
ein Mittel zur Konvertierung einer eingegebenen Sprache in den genannten Etikettenstrom auf der Basis der genannten Informationen über die Gruppe von Etiketten;
ein Mittel für den Abruf der genannten Wahrscheinlichkeitswerte eines Markov-Modells, die sich auf jedes der im genannten Etikettenstrom enthaltenen Etiketten beziehen, durch direkte Speicherzugriffsübertragung aus dem genannten Hauptspeicher;
ein Mittel zur Anhäufung der genannten Wahrscheinlichkeitswerte, die auf diese Weise für jedes der genannten Vokabelwörter abgerufen wurden; und
ein Mittel zur Anhäufung der genannten Wahrscheinlichkeitswerte, die auf diese Weise für jedes der genannten Vokabelwörter abgerufen wurden; und
ein Mittel zur Bestimmung eines oder mehrerer Wörter als Ergebnis der Erkennung auf der Basis der angehäuften Wahrscheinlichkeitswerte.

6. Ein Spracherkennungssystem gemäß Anspruch 5, wobei das genannte Mittel für den Abruf der genannten Wahrscheinlichkeitswerte durch direkte Speicherzugriffsübertragung ein Bus-Master ist.

7. Ein Spracherkennungssystem gemäß Anspruch 6, wobei die genannte Signalverarbeitungseinheit einen Speicher umfaßt, dessen Geschwindigkeit höher ist als die des genannten Speichers, wobei der genannte Speicher die genannten abgerufenen Wahrscheinlichkeitswerte vorübergehend speichert und die angehäuften Wahrscheinlichkeitswerte speichert.

8. Ein Spracherkennungs- und -verarbeitungssystem, das ein Computersystem mit einem Prozessor, einem Hauptspeicher sowie Eingabe- und Ausgabegeräte umfaßt, die gemeinsam an einen Bus gekoppelt sind, und das weiterhin eine Spracherkennungseinheit umfaßt, die an den Bus angeschlossen ist; wobei das genannte Spracherkennungs- und -verarbeitungssystem folgendes umfaßt:
ein Mittel zur Konvertierung einer eingegebenen Sprache in einen Etikettenstrom auf der Basis von Informationen über eine Gruppe von Etiketten, die Klangfarben angeben, die einer Mikrozeitperiode zugeordnet werden können;
ein Mittel für den Abruf von Wahrscheinlichkeitswerten eines Markov-Modells, das sich auf jedes Etikett bezieht, das im genannten Etikettenstrom enthalten ist, durch direkte Speicherzugriffsübertragung aus einem Hauptspeicher, der zuvor Informationen über die genannten Wahrscheinlichkeitswerte der genannten Markov-Modelle speichert, die Sprechmodelle von Vokabelwörtern definieren, wobei die genannten Informationen für jedes der genannten Etiketten zugreifbar angeordnet sind;
ein Mittel, das auf die Wahrscheinlichkeitswerte reagiert, die abgerufen wurden, um die genannten Wahrscheinlichkeitswerte für jedes der genannten Wörter anzuhäufen; und
ein Mittel, das auf die angehäuften Wahrscheinlichkeitswerte reagiert, um zu bestimmen, daß eines oder mehrere Wörter das Ergebnis der Erkennung ist.

9. Ein Spracherkennungssystem zur Speicherung von Informationen über eine Gruppe von ersten Etiketten, die Klangfarben angeben, die einer Mikrozeitperiode zugeordnet werden können, Informationen über Wahrscheinlichkeiten, daß die entsprechenden der genannten ersten Etiketten, die als Ausdruck entsprechender der genannten ersten Etiketten erzeugt werden, als Ausdruck entsprechender Vokabelwörter erzeugt werden, Informationen über Sprechmodelle der genannten Vokabelwörter, von denen jedes als eine Kette von Markov-Modellen in einer Gruppe dargestellt ist, wobei diese Gruppe Markov-Modelle enthält, die sich auf die betreffenden zweiten Etiketten beziehen, die Klangfarben angeben, die einer Mikrozeitperiode zugeordnet werden können, und Informationen über Wahrscheinlichkeitswerte der genannten Markov-Modelle als Reaktion auf eine Spracheingabe, um nacheinander die betreffenden ersten Etiketten zu produzieren, um aus der genannten Spracheingabe einen ersten Etikettenstrom zu erzeugen, um zu bestimmen, ob die genannten Vokabelwörter Erkennungskandidaten sind, indem die genannten ersten Etikettenströme und die genannten Wahrscheinlichkeiten, daß die entsprechenden der genannten ersten Etiketten als Ausdruck entsprechender Vokabelwörter erzeugt werden, verwendet werden, um die genannten Wahrscheinlichkeitswerte der genannten Markov-Modelle auf der Basis von Sprechmodellen der genannten Erkennungskandidaten und des genannten ersten Etikettenstroms anzuhäufen, und um auf der Basis angehäufter Wahrscheinlichkeitswerte eine ausführliche Spracherkennung durchzuführen, wobei dieses System folgendes umfaßt:
einen Bus;
einen Prozessor, der an den genannten Bus gekoppelt ist;
einen Hauptspeicher für den genannten Prozessor zur Speicherung von Informationen über die genannten Wahrscheinlichkeiten, daß die entsprechenden der genannten ersten Etiketten als Ausdruck entsprechender der genannten Vokabelwörter erzeugt werden und für jedes der genannten ersten Etiketten zugreifbar sind, und zur Speicherung von Informationen über Sprechmodelle der genannten Wörter, die für jedes der genannten Vokabelwörter zugreifbar sind, wobei der genannte Hauptspeicher an den genannten Bus gekoppelt ist; und
eine Signalverarbeitungseinheit, die an den genannten Bus gekoppelt ist, wobei die genannte Signalverarbeitungseinheit weiterhin folgendes umfaßt:
ein Mittel zur Konvertierung der genannten Spracheingabe in den genannten ersten Etikettenstrom;
ein Mittel für den Abruf von Informationen über Wahrscheinlichkeiten, daß entsprechende der genannten Vokabelwörter das genannte erste Etikett produzieren, für jedes der im genannten ersten Etikettenstrom enthaltenen Etiketten, wobei die genannten Informationen durch direkte Speicherzugriffsübertragung aus dem genannten Hauptspeicher abgerufen werden;
ein Mittel für die Anhäufung von Wahrscheinlichkeiten, die auf diese Weise bei jedem der genannten Etiketten, die im genannten ersten Etikettenstrom enthalten sind, für das betreffende genannte Vokabelwort abgerufen wurden;
ein Mittel zur Bestimmung von Kandidatenwörtern auf der Basis der angehäuften Wahrscheinlichkeiten;
ein Mittel für den Abruf von Informationen über Wahrscheinlichkeitswerte, daß entsprechende der genannten Etiketten bei jedem Übergang erzeugt werden, für jedes der ersten Etiketten, die im genannten ersten Etikettenstrom enthalten sind, wobei die genannten Informationen durch direkte Speicherzugriffsübertragung aus dem genannten Hauptspeicher abgerufen werden;
ein Mittel zur Berechnung der Wahrscheinlichkeit, daß die genannten Wortkandidaten die genannte Spracheingabe sind, und zwar als Reaktion auf die genannten Informationen über Sprechmodelle und die genannten Informationen über Wahrscheinlichkeitswerte, die für betreffende der genannten ersten Etiketten abgerufen wurden; und
ein Mittel für die Erzeugung eines Erkennungsergebnisses auf der Grundlage der genannten Wahrscheinlichkeit.

## Revendications

1. Un système de reconnaissance de la parole, comprenant :
un ordinateur (1) ayant une mémoire principale (4); et
une unité de reconnaissance de la parole (5) reliée à l'ordinateur;
ladite unité de reconnaissance de la parole comprenant des moyens de stockage (9) destinés à stocker une information de repère pour un jeu de repères indicatif des types de timbres vocaux, chacun affectable à une période de temps prédéterminée;
une logique (8) destinée à convertir un texte énoncé d'entrée en un flot de repères, sur la base de l'information de repère mémorisée; la logique (8) étant conçue pour accumuler des probabilités en se basant sur le flot de repères et les modèles de mots, concernant des mots se trouvant dans un vocabulaire ayant été défini par une information de probabilité à modèle de Markov, pour des mots dans un vocabulaire;
une logique (8) destinée à déterminer un ou plusieurs mots devant être le résultat de la reconnaissance, basée sur les probabilités accumulées;
caractérisé en ce que l'information de probabilité à modèle de Markov, définissant les modèles de mots, est mémorisée dans la mémoire principale d'ordinateur (4) et l'unité de reconnaissance de parole (5) comprenant en outre des moyens (6), destinés à extraire l'information de probabilité à modèle Markov mémorisée, liée aux repères se trouvant dans le flot de repères, tel que requis par un transfert à accès mémoire direct, à partir de la mémoire principale de l'ordinateur.

2. Un système de traitement de reconnaissance de la parole selon la revendication 1, dans lequel les moyens (6) d'extraction des valeurs de probabilité par un transfert d'accès mémoire direct sont constitués d'un bus principal.

3. Un système de traitement de reconnaissance de la parole selon la revendication 1 ou la revendication 2, comprenant un dispositif mémoire ayant une vitesse supérieure à celle de la mémoire principale, ledit dispositif mémoire mémorisant de façon temporaire lesdites valeurs de probabilités extraites et stockant les valeurs de probabilité accumulées.

4. Une méthode de traitement de la parole, comprenant les étapes consistant à :
mémoriser l'information de repère pour un jeu de repères indicatif de types de timbres vocaux, chacun pouvant être affecté à une période de temps prédéterminée;
convertir l'énonciation vocale d'entrée en un flot de repères sur la base de l'information de repère stockée;
accumuler les probabilités en se basant sur le flot de repères et les modèles de mot pour des mots se trouvant dans le vocabulaire, définies par l'information de probabilité à modèle de Markov, pour des mots se trouvant dans un vocabulaire;
déterminer un ou plusieurs mots devant être le résultat de la reconnaissance, sur la base des probabilités accumulées;
caractérisée par
la mémorisation de l'information de probabilité à modèle de Markov définissant les modèles de mots, dans la mémoire de stockage principale d'un ordinateur; et
extraire l'information de probabilité à modèle de Markov stockée, liée aux repères se trouvant dans le flot de repères, tel que nécessité par un transfert à accès mémoire direct à partir de la mémoire principale de l'ordinateur;

5. Un système de reconnaissance de la parole destiné à stocker des valeurs de probabilité de modèles d'énonciation vocale définissant des modèles de Markov et concernant des mots de vocabulaire, et une information sur un jeu de repères, indiquant des types de timbres vocaux pouvant être affectés à des micro-périodes de temps, pour générer de façon séquentielle des repères correspondantes, en réponse à une énonciation vocale d'entrée, afin de générer un flot de repères de ladite énonciation vocale d'entrée, pour accumuler lesdites valeurs de probabilité desdits modèles de Markov sur la base desdits modèles d'énonciation vocale desdits mots et dudit flot de repères et pour effectuer une reconnaissance de parole sur la base des valeurs accumulées, comprenant :
un bus;
un processeur couplé audit bus;
une mémoire principale pour ledit processeur, pour mémoriser lesdites valeurs de probabilité desdits modèles de Markov, par la voie d'un accès à chacun desdits repères, ladite mémoire principale étant couplée audit bus; et
une unité de traitement de signal couplée audit bus,
ladite unité de traitement de signal comprenant :
des moyens pour mémoriser une information concernant ledit jeu de repères;
des moyens pour convertir une énonciation vocale d'entrée en ledit flot de repères sur la base de ladite information sur le jeu de repères;
des moyens pour extraire lesdites valeurs de probabilité d'un modèle de Markov, liées à chacune des repères contenues dans ledit flot de repères, par un transfert à accès mémoire direct depuis la mémoire principale;
des moyens pour accumuler lesdites valeurs de probabilité ainsi extraites pour chacun desdits mots de vocabulaire; et
des moyens pour accumuler lesdites valeurs de probabilité ainsi extraites pour chacun desdits mots de vocabulaire; et
des moyens pour déterminer un ou plusieurs mots devant être le résultat de la reconnaissance sur la base des valeurs de probabilité ayant été accumulées.

6. Un système de reconnaissance de la parole selon la revendication 5, dans lequel les moyens prévus pour l'extraction desdites valeurs de probabilité par un transfert à accès mémoire direct sont prévus dans un bus principal.

7. Un système de reconnaissance de la parole selon la revendication 6, dans lequel ladite unité de traitement de signal comprend une mémoire ayant une vitesse supérieure à celle de ladite mémoire, ladite mémoire mémorisant de façon temporaire lesdites valeurs de probabilité extraites et mémorisant lesdites valeurs de probabilité accumulées.

8. Un système de traitement de la reconnaissance de la parole, comprenant un système d'ordinateur ayant un processeur, une mémoire principale et des dispositifs d'entrée et de sortie couplés en commun à un bus et comprenant, en outre, une unité de reconnaissance de la parole liée au bus; ladite unité de traitement de reconnaissance de la parole comprenant :
des moyens prévus pour convertir une énonciation vocale d'entrée en un flot de repères, sur la base d'une information d'un jeu de repères indiquant les types de timbres vocaux pouvant être affectés à une micro-période de temps;
des moyens pour extraire les valeurs de probabilité d'un modèle de Markov lié à chaque repère contenu dans ledit flot de repères, par un transfert à accès mémoire direct depuis une mémoire principale qui, au préalable, stocke une information concernant lesdites valeurs de probabilité sur lesdits modèles d'énonciation vocale définissant les modèles de Markov et concernant les mots de vocabulaire, ladite information étant agencée avec accès chacun desdites repères;
des moyens, réagissant aux valeurs de probabilité ainsi extraites, pour accumuler lesdites valeurs de probabilité pour chacun desdits mots; et
des moyens réagissant aux valeurs de probabilité accumulées pour déterminer ou plusieurs mots devant être le résultat de la reconnaissance.

9. Un système de reconnaissance de la parole, pour stocker une information sur un jeu de premières repères indiquant des types de timbres vocaux pouvant être affectés à une micro-période de temps, une information concernant des probabilités que des repères respectifs parmi lesdites premiers repères soient produits en énonciation vocale de mots de vocabulaire respectifs, une information concernant les modèles d'énonciation vocale desdits mots de vocabulaire, représentés chacun sous forme de chaîne de modèles de Markov, dans un jeu, ledit jeu comprenant des modèles de Markov correspondant à des deuxièmes repères respectifs indiquant des types de timbres vocaux pouvant être affectés à une micro-période de temps, et une information concernant des valeurs de probabilité desdits modèles de Markov, en réponse à une énonciation vocale d'entrée, pour produire séquentiellement des premières repères correspondants, afin de générer un premier flot de repères de ladite énonciation vocale d'entrée, pour déterminer si lesdits mots de vocabulaire sont des candidats à la reconnaissance, par utilisation desdits premiers flots de repères et desdites probabilités selon lesquelles des repères respectifs parmi lesdites premières repères soient produits en énonciation vocale de mots de vocabulaire respectifs, pour accumuler lesdites valeurs de probabilité desdits modèles de Markov sur la base des modèles d'énonciation vocale desdits candidats à la reconnaissance et dudit premier flot de repères, et pour effectuer une reconnaissance détaillée de la parole sur la base des valeurs de probabilité ayant été accumulées, comprenant :
un bus;
un processeur couplé audit bus;
une mémoire principale pour ledit processeur, pour mémoriser ladite information concernant lesdites probabilités que des repères respectifs parmi lesdites premières repères soient produites en donnant des énonciations vocales de mots respectifs parmi lesdits mots de vocabulaire, avec accès à chacun desdits premiers repères, et mémoriser une information concernant les modèles d'énonciation vocale des mots, avec accès à chacun desdits mots de vocabulaire, ladite mémoire principale étant couplée audit bus; et
une unité de traitement de signal couplée audit bus, en outre
une unité de traitement de signal comprenant :
des moyens pour convertir ladite énonciation vocale d'entrée en ledit premier flot de repères;
des moyens pour extraire, pour chacun des repères contenus dans ledit premier flot de repères, une information concernant les probabilités que des mots de vocabulaire respectifs, parmi lesdits mots de vocabulaire, produisent ledit premier repère, ladite information étant extraite par transfert à accès mémoire direct à partir de ladite mémoire principale;
des moyens, pour accumuler les probabilités ainsi extraites pour ledit mot de vocabulaire, respectivement à chacun desdits repères contenus dans ledit premier flot de repères;
des moyens pour déterminer des mots candidats sur la base des probabilités accumulées;
des moyens pour chacun des premiers repères contenus dans ledit premier flot de repères, pour extraire une information concernant des valeurs de la probabilité selon laquelle des repères respectifs parmi lesdites repères soient produits à chaque transition, ladite information étant extraite par transfert à accès mémoire direct à partir de ladite mémoire principale;
des moyens, pour calculer la probabilité que lesdits candidats de mots soient ladite énonciation vocale d'entrée, en réponse à ladite information concernant les modèles d'énonciation vocale et ladite information concernant les valeurs de probabilité, extraites pour des repères respectifs parmi lesdites premières repères; et
des moyens pour générer un résultat de reconnaissance, sur la base de ladite probabilité.
